# NEUE EUROPÄISCHE PATENTSCHRIFT

(11) **EP 2 676 943 B2**
(45) Veröffentlichungstag und Bekanntmachung des Hinweises auf die Entscheidung über den Einspruch: **20.01.2021**
(45) Hinweis auf die Patenterteilung: 08.04.2015
(21) Anmeldenummer: 12004620.6
(22) Anmeldetag: 20.06.2012
(51) Int. Cl.: C04B 111/00, C04B 7/345

(54) **Verfahren zur Herstellung eines Belitzements mit hoher Reaktivitaet und geringem Calcium/Silicat-Verhaeltnis**
Method for producing a Belite cement with high reactivity and low calcium/silicate ratio
Procédé de fabrication d'un ciment de bélite hautement réactif avec un rapport calcium/silicate faible

(43) Veröffentlichungstag der Anmeldung: 25.12.2013
(73) Patentinhaber: HeidelbergCement AG, 69120 Heidelberg (DE)
(72) Erfinder: Bellmann, Frank, 99423 Weimar (DE); Link, Tim, 99423 Weimar (DE); Ludwig, Horst-Michael, 99423 Weimar (DE); Ben Haha, Mohsen, 69117 Heidelberg (DE)
(74) Vertreter: Zellentin & Partner mbB Patentanwälte

(56) Entgegenhaltungen:
- EP-A1- 1 719 741
- EP-A1- 2 243 754
- WO-A2-2007/017142
- Young-Min Kim, Et Al.: "Influence of Minor Ions on the Stability and Hydration Rates of beta- Dicalcium Silicate", Journal of American Ceramic Society, vol. 87, no. 5, 1 January 2004 (2004-01-01), pages 900-905,

## Beschreibung

Die vorliegende Erfindung betrifft Baustoffe, insbesondere ein Verfahren zur Herstellung eines Bindemittels für Beton, Mörtel oder Putz und ein gemäß diesem Verfahren hergestelltes Bindemittel sowie dessen Verwendung.

Zement als hydraulisches Bindemittel ist ein wichtiges industrielles Erzeugnis, das zu wesentlichen Anteilen aus Portlandzementklinker besteht. Dieser Klinker wird durch Sinterung eines Gemisches aus Kalk, Sand, Ton und Korrekturstoffen bei etwa 1450 °C hergestellt. Nach der Hochtemperaturreaktion liegen die folgenden fremdoxidhaltigen Phasen vor: Alit (Ca₃SiO₅, wird auch als C₃S bezeichnet), Belit (Ca₂SiO₄, wird auch als C₂S bezeichnet), Aluminat (Ca₃Al₂O₆, wird auch als C₂A bezeichnet) und Ferrit (Ca₂(AlₓFe₁₋ₓ)₂O₅, wird auch als C₄AF bezeichnet). Dabei tritt Belit hauptsächlich in der Form des β-Polymorphs auf. Diese Phase gilt als relativ träge mit einem geringen Beitrag zur Festigkeit im frühen Alter.

Die hydraulische Reaktivität beschreibt die Reaktion eines Bindemittels mit Wasser unter Bildung eines festen Materials. Im Gegensatz zu derjenigen von Alit erfolgt die Belit-Hydratation langsam über mehrere Monate und Jahre.

Es ist bekannt, dass die Reaktivität von Belit mit Wasser durch mechanochemische Aktivierung (DD 138197 A1), eine schnelle Kühlung nach dem Brennprozess (DD138197 A1 und DE3414196 A1) sowie den Einbau von Fremdoxiden (US 5509962 A und DE 3414196 A1) verbessert werden kann. Außerdem sind neben der β-Variante des Belits andere Polymorphe bekannt, die eine bessere (α, α'H, α'L und x) oder schlechtere Reaktivität aufweisen (γ).

Aus H. Ishida, S. Yamazaki, K. Sasaki, Y. Okada, T. Mitsuda, [alpha]-Dicalcium Silicate Hydrate: Preparation, Decomposed Phase, and Its Hydration, J. Am. Ceram. Soc. 76, S. 1707-1712, 1993 ist ein Verfahren zur Herstellung von α-Dicalcium-Silikat-Hydrat (α-C₂SH) bei 200 °C durch eine zweistündige hydrothermale Behandlung von gebranntem Kalk (CaO) und Kieselsäure für Laborsynthesen (Reinheitsgrad p.a.) bekannt. Im Temperaturbereich von 390-490 °C wandelt sich α-C₂SH in verschiedene C₂S-Modifikationen um, die bei weiterer Erhitzung auf 920-960 °C in die α'L-Phase übergehen und beim Abkühlen β-C₂S bilden. Nachteilig hieran ist der hohe Anteil an reaktionsträgem γ-C₂S.

In DE 10 2009 018 632 ist ein Verfahren zur Herstellung eines belithaltigen Bindemittels offenbart, in dem ein Zwischenprodukt, das bei 120 -250 °C durch hydrothermales Behandeln des Ausgangsmaterials mit einem molaren Verhältnis Ca/(Si+Al) zwischen 1,5 und 2,5 hergestellt wurde, einer Reaktionsmahlung bei 100-200°C zwischen 5 min und 30 min unterzogen wird. Nachteilig ist, dass das Reaktionsmahlen ein energetisch ineffizienter Schritt ist. Weiterhin kann nur bei Zugabe von Fließmitteln eine ausreichende Druckfestigkeit nach der Erhärtung erreicht werden.

DE 10 2005 037 771 offenbart ein Verfahren zur Herstellung von Belit-Zement, in dem α-Dicalcium-Silikat-Hydrat (α-C₂SH) bei 100-300 °C durch eine hydrothermale Behandlung des Ausgangsmaterials, das CaO und SiO₂ im molaren Ca/Si-Verhältnis 1,5-2,5 enthält, entsteht. Im Temperaturbereich zwischen 500 und 1000 °C wird α-C₂SH in hydraulisch reaktive C₂S-Modifikationen (Belit-Zement) umgewandelt. Nachteilig hieran ist, dass der Brennprozess bei vergleichsweise hoher Temperatur (über 500 °C) durchgeführt werden muss. Diese hohen Temperaturen führen weiterhin zur Senkung der Reaktivität des Bindemittels.

Es bestand daher die Aufgabe, ein Verfahren zur Herstellung von Bindemitteln vorzuschlagen, durch das eine erhöhte Reaktivität des auf einer Belit-Phase basierenden Bindemittels erzielt werden kann, um dadurch leistungsfähige Zemente mit einem hohen Gehalt dieser Phase herzustellen. Dadurch sollte sich auch eine deutlich geringere Kohlendioxidemissionen als bei konventionellen Portlandzementen mit hohen Alitanteil erzielen lassen.

Gelöst wird die Aufgabe durch ein Verfahren zur Herstellung eines Bindemittels gemäss Anspruch 1.

Gemäß dem erfindungsgemäßen Verfahren soll das molare Verhältnis von Calcium zu Silizium von 1,5 bis 2,5, bevorzugt etwa 2, betragen. Bei der Ermittlung dieses Verhältnisses werden diejenigen Verbindungen nicht berücksichtigt, die sich bei dem Herstellungsverfahren inert verhalten.

Als Ausgangsmaterial können Primär- und/oder Sekundärrohstoffe eingesetzt werden. In einer bevorzugten Ausgestaltung werden Quarze, Sande oder Kiese als Rohstoffe für das Ausgangsmaterial verwendet. Besonders bevorzugt sind Rohstoffe, die neben SiO₂ auch CaO enthalten, so dass das gewünschte Verhältnis Ca/Si bereits vorliegt. Ist das gewünschte Ca/Si-Verhältnis nicht vorhanden, so müssen die Materialien vor der weiteren Behandlung bezüglich der chemischen Zusammensetzung durch Zugabe weiterer Reaktionspartner wie Ca- oder Si-haltiger Feststoffe zur Einstellung des erforderlichen Ca:Si-Verhältnisses von 1,5 bis 2,5 eingestellt werden. Hierfür eignen sich beispielweise Portlandit Ca(OH)₂ oder gebrannter oder ungebrannter Kalk. In der Regel werden die Rohstoffe auch bezüglich Korngrösse und Korngrössenverteilung durch mechanische oder thermische Behandlung optimiert, wobei die thermische Behandlung auch zu einer Optimierung der chemischen Zusammensetzung führen kann.

In einer bevorzugten Ausgestaltung wird Feinkornmaterial als Ausgangsmaterial gewählt, dessen Größtkorn vorzugsweise höchstens 0,1 mm beträgt. Hierfür kommen insbesondere die feineren Kornfraktionen aus der Wiederaufbereitung von zementhaltigen Bindemitteln in Baustoffen wie Altbetonen und -zementen zum Einsatz. Ein feineres Ausgangsmaterial ist sowohl im Hinblick auf die Umsetzungsgeschwindigkeit vorteilhaft, als auch hinsichtlich des Aufwandes für die Mahlung des fertigen Zementes. Bei entsprechend feinem Ausgangsmaterial kann eine Mahlung entbehrlich sein.

Während des Mischens der Rohstoffe b) ist die Zugabe von zusätzlichen Elementen in einer Menge von 0,1 bis 30 Gew.-% erforderlich. Schwefel, Phosphor oder deren Kombination sind diese zusätzlichen Elemente. Hierfür eignen sich Alkali- und/oder Erdalkali-Salze und/oder Hydroxide, beispielweise CaSO₄·H₂O, CaSO₄· ½ H₂O, CaSO₄, CaHPO₂·2H₂O, Ca₃P₂O₈, MgSO₄, Na₃PO₄, K₃PO₄ usw. Die Ausgangsmaterialmischung weist ein molares Verhältnis P/Si von etwa 0,05 und/oder S/Si von etwa 0,05 auf.

Die, ggfs. wie beschrieben vorbehandelte, Rohstoffmischung kann gegebenenfalls mit Kristallisationskeimen, die Calciumsilikathydrate enthalten, versetzt, also geimpft werden. Die Reaktion kann hierbei durch Impfen mit von 0,01 - 30 Gew.-% verschiedener Calciumsilikathydrat enthaltender Verbindungen, insbesondere mit α-2CaO·SiO₂·H₂O, Afwillit, Calciochondrodit, β-Ca₂SiO₄ und anderen Verbindungen, beschleunigt werden.

Die hergestellte Mischung der Rohstoffe, die ggf. wie oben beschrieben geimpft ist, wird anschließend in Schritt c) einer hydrothermalen Behandlung im Autoklaven bei einer Temperatur von 100 bis 300 °C, bevorzugt von 150 °C bis 250 °C unterzogen. Hierbei werden bevorzugt ein Wasser/Feststoff-Verhältnis von 0,1 bis 100, bevorzugt von 2 bis 20, und Verweilzeiten von 0,1 bis 24 Stunden, bevorzugt von 1 bis 16 Stunden, gewählt.

Die Mischung der Rohstoffe kann in einem zusätzlichen Schritt gebrannt werden. Dieser Schritt ist besonders bevorzugt bei der Verwendung von industriellen Nebenprodukten oder relativ wenig reaktiven bzw. groben Materialien als Rohstoffe. Dabei sind Temperaturen von 400 bis 1400 °C, vorzugsweise von 750 bis 1100 °C, geeignet. Die Brenndauer beträgt 0,1-6 Stunden, bevorzugt 1 Stunde. Durch das Brennen der Rohstoffe ergibt sich der Vorteil, dass Stoffe gezielt nutzbar gemacht werden, welche ansonsten kaum / nicht verwendet werden können (z.B. kristalline Aschen und Schlacken usw.) indem eine verbesserte/größere Umsetzbarkeit im Autoklaven zum Zwischenprodukt α-C₂SH ermöglicht wird (durch Entsäuerung und oder Entwässerung...). Des Weiteren bietet sich der Vorteil, dass gezielt Precursor-Phasen (z.B. reaktionsträger Belit) erzeugt werden können, welche Produkte nach Schritt c) und d) mit besonders hohen Gehalten an x-C₂S, α-C₂S und/oder mindestens einer reaktiven, röntgenamorphen Phase aufweisen. Der Vorteil der Verwendung von Belit als Rohmaterial für den Autoklavprozess ist eine verbesserte Phasenzusammensetzung des finalen Bindemittels gegenüber ungebrannten Rohstoffen.

Das durch Mischen und ggfs. Brennen der Rohstoffe erzeugte Produkt wird entsprechend Schritt c) in das mindestens ein Calciumsilikathydrat und ggf. weitere Verbindungen enthaltende Zwischenprodukt durch hydrothermale Behandlung umgewandelt. Dies erfolgt in einem Autoklaven, bei einer Temperatur von 100 bis 300 °C und einer Verweilzeit von 0,1 bis 24 h, wobei das Wasser/Feststoff-Verhältnis von 0,1 bis 100 beträgt.

Im folgenden Schritt d) wird das so hergestellte Zwischenprodukt bei einer Temperatur von 350 °C bis 495°C getempert. Hierbei betragen die Aufheizrate von 10 - 6000 °C/min, bevorzugt von 20 - 100 °C/min und besonders bevorzugt etwa 40 °C/min, und die Verweilzeit von 0,01 - 600 min, bevorzugt von 1 - 120 min und besonders bevorzugt von 5 - 60 min. Zur Senkung des Anteils an reaktionsträgerem γ-C₂S bewährt sich eine zusätzliche Haltezeit während des Aufheizens bei 400 - 440 °C von 1 - 120 min, bevorzugt von 10 - 60 min. Es findet kein Reaktionsmahlen statt.

Nach dem Abkühlen erhält man das gewünschte, hydraulisch reaktive Bindemittel. Das erfindungsgemäße Bindemittel enthält 30 - 100 % der folgenden Verbindungen: x-Ca₂SiO₄, röntgenamorphe Verbindungen variabler Zusammensetzung, β-Ca₂SiO₄ und reaktives γ-Ca₂SiO₄ mit einem phasenspezifischen Hydratationsgrad von zumeist mindestens 50 % in den ersten 7 Tagen nach dem Anmachen mit Wasser. Die BET-Oberfläche des Bindemittels soll von 1 bis 30 m²/g betragen. Die SiO₂-Tetraeder im Bindemittel weisen einen mittleren Kondensationsgrad von weniger als 1,0 auf. Der Wassergehalt im Bindemittel beträgt weniger als 3,0 Gew.-%. Dieses Bindemittel wird gegebenenfalls in an sich bekannter Weise auf eine gewünschte Feinheit bzw. Kornverteilung gemahlen. Ein Mahlen kann bei feinen Rohstoffen und geeigneter Kornverteilung entbehrlich sein.

Das Bindemittel enthält vorzugsweise x-Ca₂SiO₄ in einem Gehalt von > 30 Gew.-% und mindestens eine röntgenamorphe Phase mit einem Gehalt > 5 Gew.-%, wobei sich alle Anteile des Bindemittels auf 100 % summieren.

Durch das erfindungsgemäße Verfahren können hydraulisch hochreaktive Bindemittel auf Basis von Ca₂SiO₄ hergestellt werden. Diese zeichnen sich dadurch aus, dass sehr reaktive Polymorphe und röntgenamorphe Phasen enthalten sind und die Bindemittel eine hohe spezifische Oberfläche besitzen. Weiterhin enthält das Bindemittel auch γ-Ca₂SiO₄. Die Bildung dieses Polymorphs wird bei der Portlandzementherstellung durch eine schnelle Klinkerkühlung vermieden, da dieser Polymorph keinen Beitrag zur Festigkeitsentwicklung leistet. Überraschend wurde gefunden, dass im Unterschied zu den bisherigen Herstellungsverfahren diese Phase, hergestellt durch das erfindungsgemäße Verfahren bei einer Temperatur < 500 °C, eine gute Reaktivität zeigt.

Im Unterschied zu DE 10 2009 018 632 erfolgt kein Reaktionsmahlen, da dieser Schritt energieintensiv ist und derart hergestellte Produkte eine geringere Reaktivität aufweisen, als die mit dem hier beschriebenen Verfahren hergestellten Produkte.

Im Unterschied zu DE 10 2007 035 257, DE 10 2007 035 258 und DE 10 2007 035 259 weist das gemäß dem erfindungsgemäßen Verfahren hergestellte Bindemittel einen mittleren Kondensationsgrad der SiO₄-Tetraeder kleiner als Q=1,0 und einen maximalen Wassergehalt von 3 Gew.-% auf.

Die Erfindung soll anhand der folgenden Beispiele erläutert werden, ohne jedoch auf die speziell beschriebenen Ausführungsformen beschränkt zu sein. Soweit nichts anderes angegeben ist oder es sich aus dem Zusammenhang nicht zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

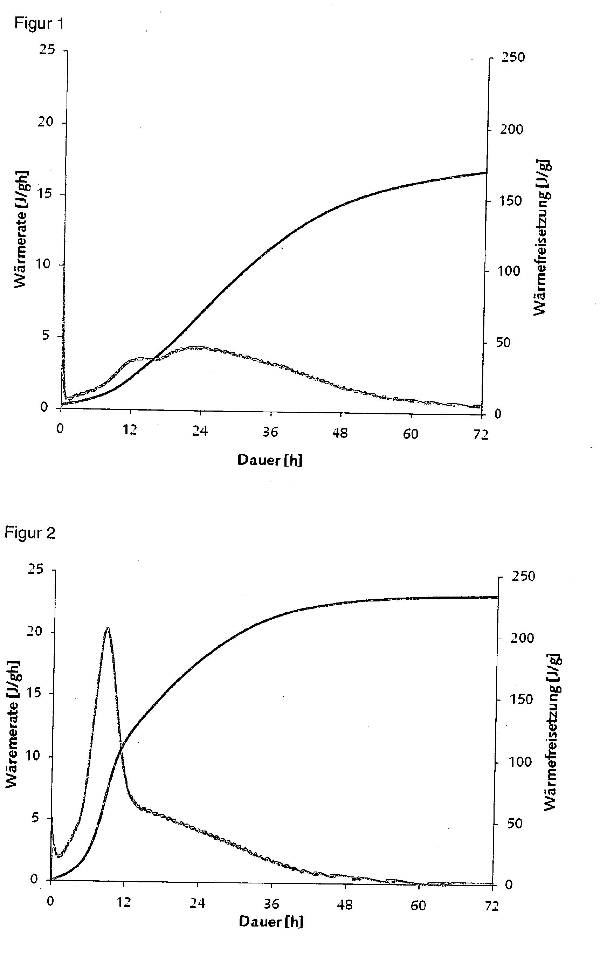

Herstellung einer Mischung aus CaCO₃, hochdispersem SiO₂ und CaSO₄•2H₂O, wobei die molaren Verhältnisse Ca/Si 2,0 und S/Si 0,05 betrugen. Diese Mischung wurde unter folgenden Bedingungen gebrannt: Temperatur 1000 °C, Brenndauer 5 Stunden, 3 Brände. Nach der Zugabe von 5 Gew.-% Impfkeimen aus α-2CaO·SiO₂·H₂O folgte für 16 Stunden eine Autoklavbehandlung bei 200 °C, bei der die Mischung in ein Zwischenprodukt umgewandelt wurde. Dieses enthielt 90 Gew.-% α-2CaO·SiO₂·H₂O, 2 Gew.-% Calcit und 8 Gew.-% amorphe Bestandteile. Das anschießende Tempern bei 475 °C überführte das Zwischenprodukt in ein reaktives Bindemittel, bestehend aus 63 Gew.-% x-Ca₂SiO₄, 15 Gew.-% β-Ca₂SiO₄,7 Gew.-% γ-Ca₂SiO₄, 2 Gew.-% Calcit und 13 Gew.-% röntgenamorphen Bestandteilen. Die hydraulische Reaktivität wurde im Wärmeflusskalorimeter nachgewiesen. Figur 1 zeigt die gemessene Wärmerate und Wärmefreisetzung.

### Beispiel 2

Herstellung einer Mischung aus Ca(OH)₂, hochdispersem SiO₂ und CaHPO₄·2H₂O, wobei die molaren Verhältnisse Ca/Si 2,0 und P/Si 0,05 betrugen. Nach der Zugabe von 5 Gew.-% Impfkeimen aus α-2CaO·SiO₂·H₂O folgte für 16 Stunden eine Autoklavbehandlung bei 200 °C, bei der die Mischung in ein Zwischenprodukt umgewandelt wurde. Nach der Reaktion im Autoklaven enthielt das hergestellte Zwischenprodukt 87 Gew.-% α-2CaO·SiO₂·H₂O, 2 Gew.-% Calcit und 11 Gew.-% röntgenamorphe Bestandteile. Das anschließende Tempern bei 475 °C für 60 min (Aufheizrate 50 °C/min) überführte das Zwischenprodukt in ein reaktives Bindemittel bestehend aus 48 Gew.-% x-Ca₂SiO₄, 13 Gew.-% γ-Ca₂SiO₄, 2 Gew.-% Calcit und 37 Gew.-% röntgenamorphen Bestandteilen. Figur 2 zeigt die im Wärmeflusskalorimeter gemessene Wärmerate und Wärmefreisetzung

## Patentansprüche

1. Verfahren zur Herstellung eines Bindemittels, umfassend die Schritte:
a) Bereitstellen eines Ausgangsmaterials aus Rohstoffen, das ein molares Ca/Si-Verhältnis von 1,5 bis 2,5 aufweist, bei dessen Ermittlung diejenigen Bestandteile unberücksichtigt bleiben, die sich bei der hydrothermalen Behandlung im Autoklaven inert verhalten,
b) Mischen der Rohstoffe,
c) Hydrothermales Behandeln der in Schritt b) hergestellten Ausgangsmaterialmischung im Autoklaven bei einer Temperatur von 100 bis 300 °C und einer Verweilzeit von 0,1 bis 24 h, wobei das Wasser/Feststoff-Verhältnis 0,1 bis 100 beträgt,
d) Tempern des in Schritt c) erhaltenen Zwischenprodukts bei 350 bis 495 °C, wobei die Aufheizrate 10-6000 °C/min und die Verweilzeit 0,01-600 min betragen
**dadurch gekennzeichnet, dass**
während des Mischens b) 0,1 bis 30 Gew.-% zusätzliche Elemente zugegeben werden, wobei Schwefel oder Phosphor oder Kombinationen davon als zusätzliche Elemente verwendet werden und die Ausgangsmaterialmischung ein molares Verhältnis von P/Si von etwa 0,05 und/oder S/Si von etwa 0,05 aufweist.

2. Verfahren gemäß Anspruch 1, **dadurch gekennzeichnet, dass** zwischen dem Mischen der Ausgangsstoffe b) und der hydrothermalen Behandlung c) ein zusätzlicher Brennprozess bei Temperaturen von 400 bis 1400 °, vorzugsweise von 750 bis 1100 °C, durchgeführt wird.

3. Verfahren gemäß Anspruch 1 oder 2, **dadurch gekennzeichnet, dass** zur Entwässerung in Schritt d) während des Aufheizens bei einer Temperatur von 400 - 440 °C eine Haltezeit von 1 - 120 min eingestellt wird.

4. Verfahren gemäß einem der Ansprüche 1 bis 3, **dadurch gekennzeichnet, dass** Alkali- und/oder Erdalkali-Salze und/oder -Hydroxide als Quelle für die zusätzlichen Elemente verwendet werden.

5. Verfahren gemäß Anspruch 4, **dadurch gekennzeichnet, dass** die Alkali- und/oder Erdalkali-Salze und/oder Hydroxide aus der Gruppe bestehend aus CaSO₄ • H₂O, CaSO₄ • ½ H₂O, CaSO₄, CaHPO₂ • 2H₂O, Ca₃P₂O₈, MgSO₄, Na₃PO₄, K₃PO₄ oder deren Mischungen ausgewählt werden.

6. Verfahren gemäß einem der Ansprüche 1 bis 5, **dadurch gekennzeichnet, dass** vor der hydrothermalen Behandlung c) dem Gemisch 0,01 - 30 Gew.-% Impfkeime enthaltend Calciumsilikathydrate zugegeben werden.

7. Bindemittel, erhältlich durch ein Verfahren gemäß mindestens einem der Ansprüche 1 bis 6.

8. Bindemittel gemäß Anspruch 7, **dadurch gekennzeichnet, dass** das Bindemittel 30 - 100 Gew.-% mindestens einer der folgenden Verbindungen enthält: röntgenamorphe Phase (variabler Zusammensetzung) und/oder x-Ca₂SiO₄ und/oder β-Ca₂SiO₄ und/oder reaktives γ-Ca₂SiO₄ mit einem phasen¬spezifischen Hydratationsgrad von mindestens 50 % in den ersten 7 Tagen nach dem Anmachen mit Wasser.

9. Bindemittel gemäß Anspruch 7 oder 8, **dadurch gekennzeichnet, dass** es vorzugsweise x-Ca₂SiO₄ mit einem Gehalt > 30 Gew.-% und mindestens eine röntgenamorphe Phase mit einem Gehalt > 5 Gew.-% enthält, wobei sich alle Anteile des Bindemittels auf 100 % summieren.

10. Bindemittel gemäß einem der Ansprüche 7 bis 9, **dadurch gekennzeichnet, dass** die BET-Oberfläche des Bindemittels im Bereich von 1 bis 30 m²/g liegt.

11. Bindemittel gemäß einem der Ansprüche 7 bis 10, **dadurch gekennzeichnet, dass** SiO₂₋Tetraeder im Bindemittel einen mittleren Kondensationsgrad kleiner als 1,0 aufweisen.

12. Bindemittel gemäß einem der Ansprüche 7 bis 11, **dadurch gekennzeichnet, dass** der Wassergehalt weniger als 3,0 Gew.-% beträgt.

13. Verwendung des Bindemittels gemäß einem der Ansprüche 7 bis 12 zur Herstellung von Baustoffen, insbesondere von Beton, Mörtel oder Putz.

## Claims

1. Method for the production of a binder, comprising the following steps:
a) providing a starting material made from raw materials that has a Ca/Si molar ratio of 1.5 to 2.5, in the determination of which the components that act in an inert manner during the hydrothermal treatment in the autoclave remain unconsidered,
b) mixing the raw materials,
c) hydrothermal treatment of the starting material mixture produced in step b) in the autoclave at a temperature of 100 to 300°C and a retention time of 0.1 to 24h, wherein the water/solids proportion is 0.1 to 100,
d) annealing the intermediate product obtained in step c) at 350 to 495°C, wherein the heating rate is 10 - 6000 °C/min and the retention time is 0.01 - 600 minutes,
**characterised in that**, during the mixing b) 0.1 to 30% by weight of additional elements are added, wherein sulphur or phosphorus or combinations thereof are used as additional elements and the starting material mixture has a molar ratio of P/Si of about 0.05 and/or S/Si of about 0.05.

2. Method according to claim 1, **characterised in that**, between the mixing of the starting materials b) and the hydrothermal treatment c), an additional burning process is carried out at temperatures of 400 to 1400°C, preferably 750 to 1100°C.

3. Method according to claim 1 or 2, **characterised in that** a hold time of 1 - 120 minutes is set for dehydration during the heating in step d) at a temperature of 400 - 440°C.

4. Method according to one of claims 1 to 3, **characterised in that** alkaline salts and/or earth alkaline salts and/or hydroxides are used as the source for the additional elements.

5. Method according to claim 4, **characterised in that** the alkaline salts and/or earth alkaline salts and/or hydroxides are selected from the group consisting of CaSO₄·H₂O, CaSO₄·½ H₂O, CaSO₄, CaHPO₂·2H₂O, Ca₃P₂O₈, MgSO₄, Na₃PO₄, K₃PO₄ or mixtures thereof.

6. Method according to one of claims 1 to 5, **characterised in that**, before the hydrothermal treatment c), 0.01 - 30% by weight of seed nuclei containing calcium silicate hydrates are added to the mixture.

7. Binder able to be obtained by a method according to at least one of claims 1 to 6.

8. Binder according to claim 7, **characterised in that** the binder contains 30 - 100% by weight of at least one of the following compounds: X-ray amorphous phase (variable composition) and/or x-Ca₂SiO₄ and/or β-Ca₂SiO₄ and/or reactive γ-Ca₂SiO₄ with a phase-specific degree of hydration of at least 50% in the first 7 days after being mixed with water.

9. Binder according to claim 7 or 8, **characterised in that** it preferably contains x-Ca₂SiO₄ having a content of > 30% by weight and at least one X-ray amorphous phase having a content of > 5% by weight, wherein all proportions of the binder add up to 100%.

10. Binder according to one of claims 7 to 9, **characterised in that** the BET surface of the binder ranges from 1 to 30m²/g.

11. Binder according to one of claims 7 to 10, **characterised in that** SiO₂ tetrahedrons in the binder have an average degree of condensation of less than 1.0.

12. Binding according to one of claims 7 to 11, **characterised in that** the water content is less than 3.0% by weight.

13. Use of the binder according to one of claims 7 to 12 for the production of building materials, in particular concrete, mortar or plaster.

## Revendications

1. Procédé de fabrication d'un agent liant, comprenant les étapes suivantes:
a) préparation, à partir de matières premières, d'un matériau de départ présentant un rapport molaire Ca/Si de 1,5 à 2,5 et qui est déterminé sans tenir compte des composants faisant preuve d'un comportement inerte lors du traitement hydrothermal en autoclave,
b) mélange des matières premières,
c) traitement hydrothermal du mélange de matériau de départ obtenu à l'étape b) en autoclave à une température de 100 à 300°C et un temps de séjour de 0,1 à 24 h, le rapport eau / matières solides de 0,1 à 100,
d) étuvage du produit intermédiaire obtenu à l'étape c) de 350 à 495 °C, la vitesse de chauffage étant de 10 à 6000 °C/min. et le temps de séjour de 0,01 à 600 minutes
**caractérisé en ce que**
pendant le mélange b), on ajoute de 0,1 à 30 % en poids d'éléments supplémentaires, lesdits éléments supplémentaires mis en œuvre étant du soufre ou du phosphore ou leurs combinaisons, et le mélange de matériau de départ présentant un rapport molaire P/Si d'environ 0,05 et/ou S/Si d'environ 0,05.

2. Procédé selon la revendication 1, **caractérisé en ce que** l'on effectue, entre le mélange des matières premières b) et le traitement hydrothermal c), une opération de cuisson supplémentaire à des températures de 400 à 1400 °C, préférentiellement de 750 à 1100 °C.

3. Procédé selon les revendications 1 ou 2, **caractérisé en ce que**, pendant le chauffage à une température de 400 à 440 °C réalisé à l'étape d), la durée de maintien est réglée de manière à être de 1 à 120 minutes, pour ainsi effectuer une dessiccation.

4. Procédé selon l'une des revendications 1 à 3, **caractérisé en ce que** l'on met en œuvre, en tant que source desdits éléments supplémentaires, des sels et/ou hydroxydes alcalins et/ou alcalino-terreux.

5. Procédé selon la revendication 4, **caractérisé en ce que** lesdits sels et/ou hydroxydes alcalins et/ou alcalino-terreux sont choisis dans le groupe constitué de CaSO₄ • H₂O, CaSO4 • ½ H₂O, CaSO₄, CaHPO₂ • 2H₂O, Ca₃P₂O₈, MgSO₄, Na₃PO₄, K₃PO₄ ou de leurs mélanges.

6. Procédé selon l'une quelconque des revendications 1 à 5, **caractérisé en ce qu'**avant le traitement hydrothermal c), on ajoute au mélange 0,01 à 30 % en poids de germes d'inoculation contenant du silicate de calcium hydraté.

7. Agent liant pouvant être obtenu par un procédé selon au moins une des revendications 1 à 6.

8. Agent liant selon la revendication 7, **caractérisé en ce que** ledit agent liant contient 30 à 100 % en poids d'au moins un des composés suivants: une phase amorphe aux rayons X (de composition variable) et/ou du x-Ca₂SiO₄ et/ou du β-Ca₂SiO₄ et/ou du γ-Ca₂SiO₄ réactif ayant un degré d'hydratation spécifique à ladite phase supérieur ou égal à 50 % dans les 7 premiers jours après le gâchage à l'eau.

9. Agent liant selon les revendications 7 ou 8, **caractérisé en ce qu'**il contient préférentiellement du x-Ca₂SiO₄ dont la teneur est > 30 % en poids et au moins une phase amorphe aux rayons X dont la teneur est > 5 % en poids, dans lequel toutes les parties de l'agent liant totalisent 100 %.

10. Agent liant selon l'une quelconque des revendications 7 à 9, **caractérisé en ce que** la surface BET de l'agent liant est dans la plage de 1 à 30 m²/g.

11. Agent liant selon l'une quelconque des revendications 7 à 10, **caractérisé en ce que** des tétraèdres de SiO₂ dans l'agent liant présentent un degré de condensation moyen inférieur à 1,0.

12. Agent liant selon l'une quelconque des revendications 7 à 11, **caractérisé en ce que** la teneur en eau est inférieure à 3,0 % en poids.

13. Utilisation de l'agent liant selon l'une quelconque des revendications 7 à 12 pour la fabrication de matériaux de construction, en particulier de béton, de mortier ou de crépi.
